# EUROPÄISCHE PATENTSCHRIFT

(11) **EP 0 923 666 B1**
(45) Veröffentlichungstag und Bekanntmachung des Hinweises auf die Patenterteilung: **05.03.2003**
(21) Anmeldenummer: 98941243.2
(22) Anmeldetag: 29.06.1998
(51) Int. Cl.: F02D 41/34, F02D 41/04

(54) **SYSTEM ZUM BETREIBEN EINER BRENNKRAFTMASCHINE INSBESONDERE EINES KRAFTFAHRZEUGS**
SYSTEM FOR OPERATING AN INTERNAL COMBUSTION ENGINE, ESPECIALLY OF AN AUTOMOBILE
SYSTEME DE FONCTIONNEMENT D'UN MOTEUR A COMBUSTION INTERNE, EN PARTICULIER D'UN VEHICULE A MOTEUR

(30) Priorität: 02.07.1997 DE 19728112
(43) Veröffentlichungstag der Anmeldung: 23.06.1999
(73) Patentinhaber: ROBERT BOSCH GMBH, 70442 Stuttgart (DE)
(72) Erfinder: ODER, Michael, D-70825 Korntal-Münchingen (DE); MAIENBERG, Uwe, D-70180 Stuttgart (DE); SCHERRBACHER, Klaus, D-71701 Schwieberdingen (DE)
(86) Internationale Anmeldenummer: DE9801776
(87) Internationale Veröffentlichungsnummer: WO99001654

(56) Entgegenhaltungen:
- EP-A- 0 539 921
- FR-A- 2 717 227
- US-A- 5 282 449
- US-A- 5 483 934
- PATENT ABSTRACTS OF JAPAN vol. 097, no. 003, 31. März 1997 & JP 08 312401 A (MITSUBISHI MOTORS CORP), 26. November 1996
- PATENT ABSTRACTS OF JAPAN vol. 013, no. 318 (M-852), 19. Juli 1989 & JP 01 104934 A (DAIHATSU MOTOR CO LTD), 21. April 1989
- PATENT ABSTRACTS OF JAPAN vol. 096, no. 002, 29. Februar 1996 & JP 07 269402 A (SUZUKI MOTOR CORP), 17. Oktober 1995

## Beschreibung

Die Erfindung betrifft ein Verfahren zum Betreiben einer Brennkraftmaschine insbesondere eines Kraftfahrzeugs, bei dem Kraftstoff entweder in einer ersten Betriebsart während einer Ansaugphase oder in einer zweiten Betriebsart während einer Verdichtungsphase direkt in einen Brennraum eingespritzt wird, und bei dem die in den Brennraum einzuspritzende Kraftstoffmasse in den beiden Betriebsarten unterschiedlich gesteuert und/oder geregelt wird. Des weiteren betrifft die Erfindung eine Brennkraftmaschine insbesondere für ein Kraftfahrzeug, mit einem Einspritzventil, mit dem Kraftstoff entweder in einer ersten Betriebsart während einer Ansaugphase oder in einer zweiten Betriebsart während einer Verdichtungsphase direkt in einen Brennraum einspritzbar ist, und mit einem Steuergerät zur unterschiedlichen Steuerung und/oder Regelung der in den Brennraum einzuspritzenden Kraftstoffmasse in den beiden Betriebsarten.

Derartige Systeme zur direkten Einspritzung von Kraftstoff in den Brennraum einzuspritzenden Kraftstoffmasse in den beiden Betriebsarten.

Derartige Systeme zur direkten Einspritzung von Kraftstoff in den Brennraum einer Brennkraftmaschine sind aus der EP 539 921-A bekannt.

Es wird als erste Betriebsart ein sogenannter Homogenbetrieb und als zweite Betriebsart ein sogenannter Schichtladungsbetrieb unterschieden. Der Schichtladungsbetrieb wird insbesondere bei kleineren Lasten verwendet, während der Homogenbetrieb bei größeren, an der Brennkraftmaschine anliegenden Lasten zur Anwendung kommt. Im Schichtladungsbetrieb wird der Kraftstoff während der Verdichtungsphase der Brennkraftmaschine in den Brennraum, und zwar dort in die unmittelbare Umgebung einer Zündkerze eingespritzt. Dies hat zur Folge, daß keine gleichmäßige Verteilung des Kraftstoffs in dem Brennraum mehr erfolgen kann, sondern daß der Kraftstoff sofort von der Zündkerze entzündet wird. Der Vorteil des Schichtladungsbetriebs liegt darin, daß dort mit einer sehr geringen Kraftstoffmasse die anliegenden kleineren Lasten von der Brennkraftmaschine ausgeführt werden können. Größere Lasten können allerdings nicht durch den Schichtladungsbetrieb erfüllt werden. Im für derartige größere Lasten vorgesehenen Homogenbetrieb wird der Kraftstoff während der Ansaugphase der Brennkraftmaschine eingespritzt, so daß eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in ein zu dem Brennraum führendes Ansaugrohr eingespritzt wird.

In beiden Betriebsarten, also im Schichtladungsbetrieb und im Homogenbetrieb, wird die einzuspritzende Kraftstoffmasse in Abhängigkeit von einer Mehrzahl von Eingangsgrößen auf einen im Hinblick auf Kraftstoffeinsparung, Abgasreduzierung und dergleichen optimalen Wert gesteuert und/oder geregelt. Die Steuerung und/oder Regelung ist dabei in den beiden Betriebsarten unterschiedlich.

Aufgabe der Erfindung ist es, bei einem Verfahren bzw. bei einer Brennkraftmaschine der eingangs genannten Art eine verbesserte Steuerung und/oder Regelung in den beiden Betriebsarten zu schaffen.

Diese Aufgabe wird bei einem Verfahren bzw. bei einer Brennkraftmaschine der eingangs genannten Art erfindungsgemäß durch die Ansprüche 1 und 11 gelöst.

Die Steuerung und/oder Regelung der einzuspritzenden Kraftstoffmasse ist im Homogenbetrieb luftgeführt. Es wird zuerst die erforderliche Luftmasse ermittelt, um daraus dann die einzuspritzende Kraftstoffmasse zu ermitteln. Insoweit entspricht die Steuerung und/oder Regelung im Homogenbetrieb etwa der Steuerung und/oder Regelung von bekannten Brennkraftmaschinen, bei denen in herkömmlicher Weise Kraftstoff in ein zu dem Brennraum führendes Ansaugrohr eingespritzt wird.

Dies bringt den wesentlichen Vorteil mit sich, daß die bei den bekannten Brennkraftmaschinen verwendete Steuerung und/oder Regelung auch bei dem vorliegenden Verfahren bzw. der vorliegenden Brennkraftmaschine für den Homogenbetrieb zumindest teilweise angewendet werden kann. Die vorhandenen Programme für das die Steuerung und/oder die Regelung durchführende Steuergerät und insbesondere das vorhandene Know-how kann somit von den bekannten Brennkraftmaschinen übernommen werden und muß somit nicht neu erarbeitet werden.

Im Schichtladungsbetrieb wird die einzuspritzende Kraftstoffmasse unmittelbar in Abhängigkeit von dem angeforderten Moment ermittelt. Dies stellt eine einfache und schnelle, aber trotzdem äußerst effektive Möglichkeit dar, die Kraftstoffmasse zu bestimmen. Diese Möglichkeit basiert dabei auf der Erkenntnis, daß im Schichtladungsbetrieb das von der Brennkraftmaschine erzeugte Moment im wesentlichen von der eingespritzten Kraftstoffmasse abhängt, während die erforderliche Luftmasse und/oder der erforderliche Zündwinkel einer in dem Brennraum angeordneten Zündkerze nur von untergeordneter Bedeutung für das erzeugte Moment sind, sofern sie gewisse Randbedingungen erfüllen.

Die erfindungsgemäße unmittelbare Ermittlung der einzuspritzenden Kraftstoffmasse aus dem angeforderten Moment ist, wie erwähnt, sehr schnell durchführbar, was den Vorteil mit sich bringt, daß kein Überschußmoment oder dergleichen vorgehalten werden muß, wie dies beispielsweise im Homogenbetrieb der Fall sein kann, sondern daß die Kraftstoffmasse unmittelbar vor der Einspritzung exakt berechnet werden kann. Dies stellt eine weitere Kraftstoffersparnis und eine weitere Verbesserung der Laufruhe der Brennkraftmaschine dar.

Insgesamt ist das erfindungsgemäße System zum Betreiben einer Brennkraftmaschine in den beiden Betriebsarten Homogenbetrieb und Schichtladungsbetrieb einerseits einfach und klar aufgebaut, gewährleistet aber andererseits in beiden Betriebsarten, daß das beispielsweise von dem Fahrer des Kraftfahrzeugs angeforderte Moment schnell und genau und insbesondere mit einem Minimum an Kraftstoff und erzeugten Abgasen zur Verfügung gestellt wird.

Bei einer vorteilhaften Ausgestaltung der Erfindung wird in der zweiten Betriebsart die erforderliche Luftmasse in Abhängigkeit von Betriebsgrößen der Brennkraftmaschine ermittelt. Auf diese Weise werden die bereits erwähnten Randbedingungen für die erforderliche Luftmasse erfüllt. Es wird somit gewährleistet, daß auch im Schichtladungsbetrieb, in dem die Luftmasse für das erzeugte Moment der Brennkraftmaschine eine untergeordnete Rolle spielt, und in dem deshalb an sich die Luftmasse nicht gesteuert und/oder geregelt werden müßte, trotzdem gerade so viel Luft dem Brennraum zugeführt wird, wie dies aufgrund der Betriebsgrößen der Brennkraftmaschine sinnvoll und erforderlich ist.

Bei einer vorteilhaften Weiterbildung der Erfindung wird die erforderliche Luftmasse in Abhängigkeit von einer Abgasrückführung und/oder einer Tankentlüftung und/oder einem Bremskraftverstärker und/oder einer Geräuschentwicklung und/oder dergleichen ermittelt.

Im Hinblick auf die Abgasrückführung wird durch die Beeinflussung der zugeführten Luftmasse erreicht, daß die Druckverhältnisse überhaupt eine Abgasrückführung zulassen. Insbesondere wird gerade so viel Luft zugeführt, daß der Druck in Strömungsrichtung vor dem Brennraum kleiner ist als der Druck nach dem Brennraum, so daß Abgas in den Brennraum angesaugt und damit rückgeführt wird.

Im Hinblick auf die Tankentlüftung gilt im wesentlichen entsprechendes. Durch die Beeinflussung der zugeführten Luftmasse wird erreicht, daß die Druckverhältnisse in einem Kraftstofftank gerade so sind, daß verdunsteter Kraftstoff in den Brennraum angesaugt und der Kraftstofftank damit entlüftet wird.

Im Hinblick auf den Bremskraftverstärker wird durch die Wahl der zugeführten Luftmasse erreicht, daß unter allen Bedingungen ein mit Unterdruck aus dem Ansaugrohr betriebener Bremskraftverstärker mit einem für eine Bremsung ausreichenden Druck versorgt wird. Es wird also immer gerade so viel Luft über das Ansaugrohr in den Brennraum zugeführt, daß dieser erforderliche Unterdruck in dem Bremskraftverstärker gewährleistet ist.

Im Hinblick auf die Geräuschentwicklung der Brennkraftmaschine hat sich gezeigt, daß diese im Schichtladungsbetrieb unter anderem abhängig ist von der zugeführten Luftmasse. Es wird deshalb die zugeführte Luft derart beeinflußt, daß eine möglichst geringe Geräuschentwicklung entsteht.

Bei einer weiteren vorteilhaften Weiterbildung der Erfindung wird für die Abgasrückführung und/oder die Tankentlüftung und/oder den Bremskraftverstärker und/oder die Geräuschentwicklung jeweils ein maximal zulässiges Druckverhältnis vorgegeben, und es wird das kleinste der maximal zulässigen Druckverhältnisse der Ermittlung der erforderlichen Luftmasse zugrundegelegt.

In allen genannten Funktionen wird durch den jeweiligen maximal zulässigen Druck erreicht, daß die jeweilige Funktion sicher durchgeführt werden kann. Bei der Abgasrückführung bzw. bei der Tankentlüftung bedeutet dies, daß bei dem jeweils zugehörigen maximal zulässigen Druck in jedem Fall Abgas bzw. verdunsteter Kraftstoff in den Brennraum angesaugt wird. Bei dem Bremskraftverstärker bedeutet dies, daß bei dem zugehörigen maximal zulässigen Druck der Bremskraftverstärker in jedem Fall sicher arbeitet. Und bei der Geräuschentwicklung bedeutet dies, daß sie bei dem zugehörigen maximal zulässigen Druck nicht als störend empfunden wird.

Aus diesen maximal zulässigen Drücken wird dann der kleinste Druck ausgewählt, es wird also eine Minimalauswahl durchgeführt. Bei diesem kleinsten Druck ist dann gewährleistet, daß alle genannten Funktionen gleichzeitig in jedem Fall funktionsfähig sind.

Besonders zweckmäßig ist es, wenn das kleinste der maximal zulässigen Druckverhältnisse mit einem tatsächlichen Druck der Umgebung verknüpft wird. Der kleinste der maximal zulässigen Drücke im Saugrohr der Brennkraftmaschine wird damit in eine erforderliche Luftmasse umgerechnet. Damit kann durch eine einfache Umschaltung zwischen Homogenbetrieb und Schichtladungsbetrieb dieselbe Steuerung bzw. Regelung für die Drosselklappe verwendet werden.

Des weiteren ist es besonders zweckmäßig, wenn das maximal zulässige Druckverhältnis für den Bremskraftverstärker und/oder für die Geräuschentwicklung über ein insbesondere von der Drehzahl der Brennkraftmaschine abhängiges Kennfeld ermittelt wird. In diesem Kennfeld kann auf besonders einfache Weise einerseits der für den Bremskraftverstärker erforderliche Unterdruck berücksichtigt werden, sowie andererseits die von der Drehzahl der Brennkraftmaschine abhängige Geräuschentwicklung.

Bei einer weiteren vorteilhaften Ausgestaltung der Erfindung wird der Einspritzbeginn und/oder das Einspritzende eines den Kraftstoff in den Brennraum einspritzenden Einspritzventils mit dem Zündwinkel einer den Kraftstoff in dem Brennraum entzündenden Zündkerze koordiniert. Dabei ist es möglich, daß der Einspritzbeginn den Zündwinkel oder der Zündwinkel den Einspritzbeginn führt. Wesentlich ist, daß im Schichtladungsbetrieb die beiden Betriebsgrößen der Brennkraftmaschine erfindungsgemäß paarweise betrachtet und gegebenenfalls auch paarweise verändert werden.

Von besonderer Bedeutung ist die Realisierung des erfindungsgemäßen Verfahrens in der Form eines elektrischen Speichermediums, das für ein Steuergerät einer Brennkraftmaschine insbesondere eines Kraftfahrzeugs vorgesehen ist. Dabei ist auf dem elektrischen Speichermedium ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem elektrischen Speichermedium abgespeichertes Programm realisiert, so daß dieses mit dem Programm versehene Speichermedium in gleicher Weise die Erfindung darstellt wie das Verfahren, zu dessen Ausführung das Programm geeignet ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels eines erfindungsgemäßen Systems zum Betreiben einer Brennkraftmaschine eines Kraftfahrzeugs,
- Figur 2: zeigt ein schematisches Blockschaltbild einer Steuerung und/oder Regelung der Betriebsgrößen des Systems der Figur 1, und
- Figur 3: zeigt ein schematisches Blockschaltbild einer Erweiterung der Steuerung und/oder Regelung der Figur 2.

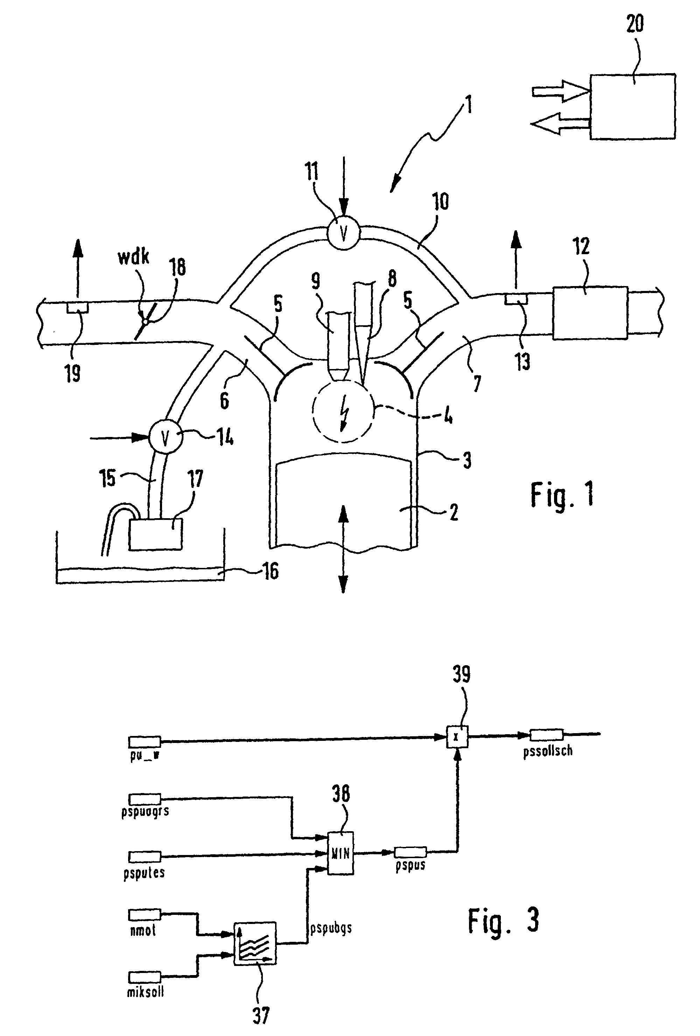

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des weiteren sind dem Brennraum 4 ein Einspritzventil 8 und eine Zündkerze 9 zugeordnet. Das Abgasrohr 7 ist über eine Abgasrückführleitung 10 und ein steuerbares Abgasrückführventil 11 mit dem Ansaugrohr 6 verbunden. Des weiteren schließt sich an das Abgasrohr 7 ein Katalysator 12 mit einem davor angeordneten Lambdasensor 13 an. Dem Ansaugrohr 6 ist eine mit einem steuerbaren Tankentlüftungsventil 14 versehene Tankentlüftungsleitung 15 zugeführt, die an einen von einem Kraftstoffbehälter 16 beaufschlagten Aktivkohlefilter 17 angeschlossen ist. Des weiteren ist in dem Ansaugrohr 6 eine steuerbare Drosselklappe 18 und ein Drucksensor 19 untergebracht.

In einer ersten Betriebsart, dem Homogenbetrieb der Brennkraftmaschine 1, wird der Kraftstoff von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff-Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

In einer zweiten Betriebsart, dem Schichtladungsbetrieb der Brennkraftmaschine 1, wird der Kraftstoff von dem Einspritzventil 8 während einer durch den Kolben 2 hervorgerufenen Verdichtungsphase in den Brennraum 4 eingespritzt, und zwar örtlich in die unmittelbare Umgebung der Zündkerze 9 sowie zeitlich unmittelbar vor dem oberen Totpunkt des Kolbens 2. Dann wird mit Hilfe der Zündkerze 9 der Kraftstoff entzündet, so daß der Kolben 2 in der nunmehr folgenden Arbeitsphase durch die Ausdehnung des entzündeten Kraftstoffs angetrieben wird.

Die im Schichtladungsbetrieb und im Homogenbetrieb von dem Einspritzventil 8 in den Brennraum 4 eingespritzte Kraftstoffmasse wird von einem Steuergerät 20 insbesondere im Hinblick auf einen geringen Kraftstoffverbrauch und/oder eine geringe Abgasentwicklung gesteuert und/oder geregelt. Zu diesem Zweck ist das Steuergerät 20 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen. Das Steuergerät 20 ist von Eingangssignalen beaufschlagt, die mittels Sensoren gemessene Betriebsgrößen der Brennkraftmaschine darstellen. Beispielsweise ist das Steuergerät 20 mit dem Lambdasensor 13 und/oder dem Drucksensor 19 verbunden. Das Steuergerät 20 erzeugt Ausgangssignale, mit denen über Aktoren das Verhalten der Brennkraftmaschine entsprechend der erwünschten Steuerung und/oder Regelung beeinflußt werden kann. Beispielsweise ist das Steuergerät 20 mit dem Einspritzventil 8, der Zündkerze 9, dem Abgasrückführventil 11, dem Tankentlüftungsventil 14 und/oder der Drosselklappe 18 verbunden.

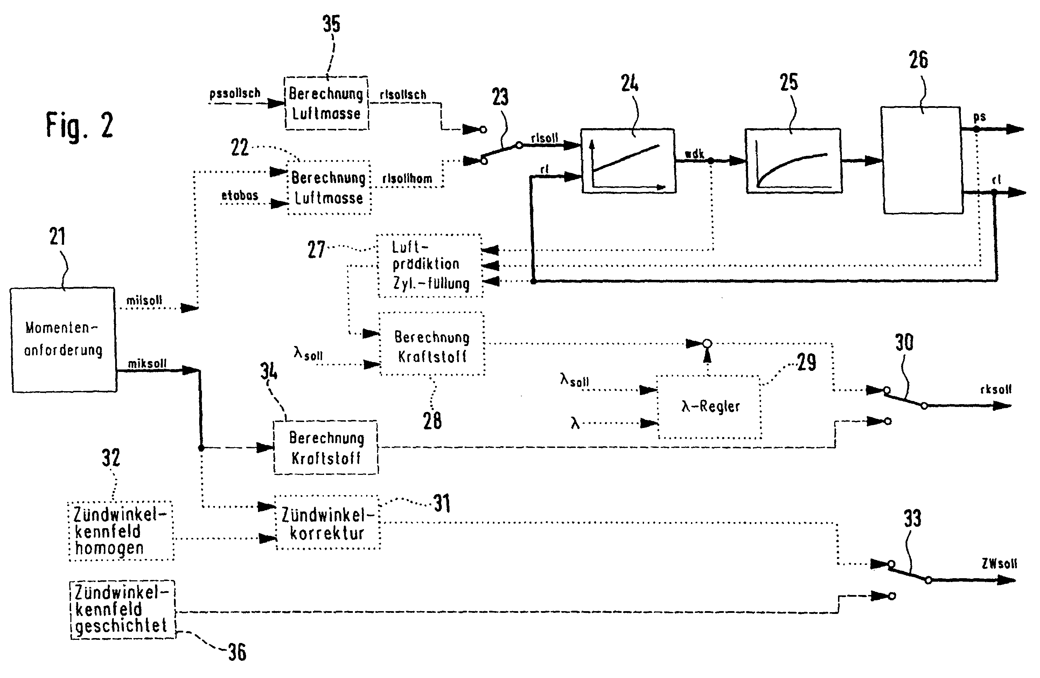

In den Figuren 2 und 3 ist das Verfahren dargestellt, mit dem der Schichtladungsbetrieb und der Homogenbetrieb der Brennkraftmaschine 1 von dem Steuergerät 20 gesteuert wird. Durchgezogene Linien betreffen dabei beide Betriebsarten, also den Homogenbetrieb und den Schichtladungsbetrieb, während gepunktete Linien nur den Homogenbetrieb und gestrichelte Linien nur den Schichtladungsbetrieb betreffen.

Eine Momentenanforderung 21 erzeugt aus der Stellung des Fahrpedals, also dem Fahrerwunsch, und gegebenenfalls aus weiteren Anforderungen des Kraftfahrzeugs ein langfristiges angefordertes Moment milsoll und ein kurzfristig angefordertes Moment miksoll.

Im Homogenbetrieb wird aus dem langfristig angeforderten Moment milsoll und einem Signal etabas in einem Block 22 die Luftmasse berechnet, die erforderlich ist, um dieses angeforderte Moment zu erzeugen. Durch das Signal etabas wird dabei der Wirkungsgrad der Brennkraftmaschine 1 berücksichtigt, beispielsweise der Wirkungsgrad bei einem bestimmten Zündwinkel oder bei einem bestimmten Lambdawert.

Das von dem Block 22 erzeugte Signal rlsollhom wird über einen Schalter 23 in einen Regelkreis gegeben, mit dem die Stellung der Drosselklappe 18 geregelt wird. Das Signal rlsoll entspricht im Homogenbetrieb dem Signal rlsollhom und ist der Sollwert der erforderlichen Luftmasse, der einem Drosselklappen-Regler 24 zugeführt wird, dem des weiteren ein Signal rl als Istwert der erforderlichen Luftmasse zugeführt ist. Das Signal wdk beaufschlagt die Drosselklappe 18 und stellt den einzustellenden Winkel der Drosselklappe 18 dar.

Über ein sogenanntes elektronisches Gaspedal 25 und eine nachfolgende Füllungserfassung 26 wird einerseits das bereits erwähnte Signal rl für den Istwert der erforderlichen Luftmasse ermittelt, sowie andererseits beispielsweise ein Signal ps, das dem Druck im Ansaugrohr 6 entspricht. Dieses Signal ps kann dabei mit Hilfe des Drucksensors 19 oder aus sonstigen vorliegenden Betriebsgrößen der Brennkraftmaschine 1 berechnet werden.

Aus den Signalen wdk und ps für die Stellung der Drosselklappe 18 und dem Druck im Ansaugrohr 6, sowie aus dem Istwert für die erforderliche Luftmasse rl und gegebenenfalls aus weiteren Betriebsgrößen der Brennkraftmaschine 1 wird dann in einem Block 27 eine Luftprädiktion für die Zylinderfüllung durchgeführt. Dies bedeutet, daß die im Zeitpunkt der Verbrennung in dem Zylinder 3 enthaltene Luftmasse vorausberechnet wird.

Auf der Grundlage dieser ermittelten Luftmasse wird in einem Block 28 die für einen vorgegebenen Lambda-Sollwert λₛₒₗₗ zugehörige Kraftstoffmasse berechnet. Mit einer nachfolgenden Lambda-Regelung 29 wird dann die Kraftstoffmasse derart geregelt, daß der mit Hilfe des Lambda-Sensors 13 gemessene Lambda-Istwert λ dem Lambda-Sollwert λₛₒₗₗ entspricht. Als Ergebnis wird ein Signal rksoll über einen Schalter 30 weitergegeben, das der einzuspritzenden Kraftstoffmasse entspricht. Auf der Grundlage dieses Signals wird dann das Einspritzventil 8 angesteuert.

Des weiteren erhält im Homogenbetrieb eine Zündwinkelkorrektur 31 das kurzfristig erforderliche Moment miksoll sowie ein Signal von einem Zündwinkelkennfeld 32. Aus diesen Signalen wird der Zündwinkel ZWsoll berechnet und über einen Schalter 33 weitergegeben, wobei dann mit dem Signal ZWsoll die Zündkerze 9 angesteuert wird.

Dabei ist es möglich, daß zur Kompensation von Abweichungen des langfristig und des kurzfristig angeforderten Moments über die Zündwinkelkorrektur 31 ein mittels der einzuspritzenden Kraftstoffmasse rksoll vorgegebenes Überschußmoment durch eine entsprechende Verstellung des Zündwinkels ZWsoll wieder abgebaut wird.

Im Schichtladungsbetrieb befinden sich die Schalter 23, 30 und 33 in der jeweils anderen Stellung. Dabei werden die Schalter 30 und 33 synchron angesteuert, während der Schalter 23 jeweils vorab umgeschaltet wird.

Dies hat zur Folge, daß die einzuspritzende Kraftstoffmasse rksoll von einem Block 34 in Abhängigkeit von dem kurzfristig angeforderten Moment miksoll berechnet wird. Diese Berechnung kann unmittelbar vor der eigentlichen Einspritzung erfolgen. Aus diesem Grund kann dieser Berechnung das das Gesamtmoment darstellende, kurzfristig angeforderte Moment miksoll zugrundegelegt werden. Es ist deshalb im Schichtladungsbetrieb nicht erforderlich, ein Überschußmoment zu erzeugen, mit dem Abweichungen des langfristig und des kurzfristig angeforderten Moments kompensiert werden könnten.

Des weiteren ist für den Schichtladungsbetrieb ein Block 35 vorgesehen, mit dem die erforderliche Luftmasse aus Betriebsgrößen der Brennkraftmaschine 1 berechnet wird. Dieser Block 35 erhält ein Eingangssignal pssollsch, auf das noch näher eingegangen werden wird, und er erzeugt ein Ausgangssignal rlsollsch, das über den Schalter 23 als Signal rlsoll den Regelkreis für die Drosselklappe 18 beaufschlagt und letzlich das Signal wdk für die Stellung der Drosselklappe 18 bestimmt.

Aufgrund des umgeschalteten Schalters 30 ist insbesondere die Lambda-Regelung 29 im Schichtladungsbetrieb unwirksam.

Ein Zündwinkelkennfeld 36 für den Schichtladungsbetrieb berechnet den Zündwinkel ZWsoll, mit dem die Zündkerze 9 angesteuert wird. Der Zündwinkel ZWsoll und der Einspritzbeginn bzw. das Einspritzende der einzuspritzenden Kraftstoffmasse rksoll hängen dabei voneinander ab. Beide Betriebsgrößen werden dabei paarweise beeinflußt. Es wird also eine Koordination des Zündwinkels mit der Einspritzung vorgenommen.

Mit Hilfe des Signals pssollsch wird die Drosselklappe 18 im Schichtladungsbetrieb auf eine bestimmte Stellung eingestellt, in der eine bestimmte Luftmasse rlsollsch bzw. rlsoll dem Brennraum 4 der Brennkraftmaschine 1 zugeführt wird. Die Erzeugung des Signals pssollsch ist in der Figur 2 dargestellt.

Damit bei geöffnetem Abgasrückführventil 11 Abgas von dem Abgasrohr 7 zu dem Ansaugrohr 6 zurückgeführt wird, ist es erforderlich, daß der Druck im Ansaugrohr 6 kleiner ist als im Abgasrohr 7. Dies wird dadurch erreicht, daß ein maximal zulässiges Druckverhältnis pspuagrs für das Ansaugrohr 6 vorgegeben wird, bei dem dies sicher der Fall ist.

Damit bei geöffnetem Tankentlüftungsventil 14 verdunsteter Kraftstoff aus dem Aktivkohlefilter 17 in das Ansaugrohr 6 entlüftet wird, ist es erforderlich, daß der Druck im Ansaugrohr 6 kleiner ist als im Aktivkohlefilter 17. Dies wird dadurch erreicht, daß ein maximal zulässiges Druckverhältnis psputes für das Ansaugrohr 6 vorgegeben wird, bei dem dies sicher der Fall ist.

Damit ein Bremskraftverstärker, der in nicht dargestellter Weise an das Ansaugrohr 6 angeschlossen ist und von dort den für seine Funktionsfähigkeit erforderlichen Unterdruck bezieht, in jedem Fall funktionsfähig ist, ist es erforderlich, daß ein gewisser Unterdruck immer im Ansaugrohr 6 vorhanden ist. Dies wird dadurch erreicht, daß ein maximal zulässiger Druck für das Ansaugrohr vorgegeben wird, bei dem dies immer der Fall ist.

Damit die Brennkraftmaschine 1 eine möglichst geringe Geräuschentwicklung aufweist, hat sich herausgestellt, daß dies mittels der zugeführten Luftmasse und damit mittels des Drucks im Ansaugrohr 6 beeinflußt werden kann.

Die beiden letztgenannten Einflußmöglichkeiten hinsichtlich des Bremskraftverstärkers und der Geräuschentwicklung werden mit Hilfe eines Kennfelds 37 durchgeführt, dem die Drehzahl nmot der Brennkraftmaschine 1 und das angeforderte Moment miksoll zugeführt ist. Das Kennfeld 37 erzeugt daraus ein Ausgangssignal pspubgs, das die Erfordernisse des Bremskraftverstärkers und der Geräuschentwicklung berücksichtigt.

Die Signale pspuagrs, psputes und pspubgs werden einer Minimalauswahl 38 zugeführt, die aus diesen maximal zulässigen Druckverhältnissen das kleinste Druckverhältnis auswählt. Damit ist gewährleistet, daß jede der beschriebenen Funktionen, also die Abgasrückführung, die Tankentlüftung, der Bremskraftverstärker und die Geräuschentwicklung in jedem Fall höchstens mit dem jeweils maximal zulässigen Druck versorgt wird und damit voll funtionsfähig ist.

Der ausgewählte kleinste Druck wird als Signal pspus an eine Verknüpfung 39 weitergegeben, von der das Signal pspus mit dem Umgebungsdruck bzw. dem Druck vor der Drosselklappe pu_w verknüpft wird. Mittels dieser Verknüpfung 39 wird das Signal pssollsch erzeugt, das dem Block 35 der Figur 1 zur Berechnung der erforderlichen Luftmasse rlsollsch bzw. rlsoll zugeführt ist.

## Patentansprüche

1. Verfahren zum Betreiben einer Brennkraftmaschine (1) insbesondere eines Kraftfahrzeugs, bei dem Kraftstoff entweder in einer ersten Betriebsart während einer Ansaugphase oder in einer zweiten Betriebsart während einer Verdichtungsphase direkt in einen Brennraum (4) eingespritzt wird, und bei dem die in den Brennraum (4) einzuspritzende Kraftstoffmasse (rksoll) in den beiden Betriebsarten unterschiedlich gesteuert und/oder geregelt wird, **dadurch gekennzeichnet, daß** in der ersten Betriebsart aus einem angeforderten Moment (milsoll) eine erforderliche Luftmasse (rlsollhom) und daraus die einzuspritzende Kraftstoffmasse (rksoll) ermittelt wird, daß in der zweiten Betriebsart die einzuspritzende Kraftstoffmasse (rksoll) unmittelbar aus dem angeforderten Moment (miksoll) ermittelt wird, und daß die erforderliche Luftmasse (rksollhom) und die einzuspritzende Kraftstoffmasse (rksoll) mittels Aktoren eingestellt werden.

2. Verfahren nach Anspruch 1, **dadurch gekennzeichnet, daß** in der zweiten Betriebsart die erforderliche Luftmasse (rlsollsch) in Abhängigkeit von Betriebsgrößen der Brennkraftmaschine (1) ermittelt wird.

3. Verfahren nach Anspruch 2, **dadurch gekennzeichnet, daß** die erforderliche Luftmasse (rlsollsch) in Abhängigkeit von einer Abgasrückführung und/oder einer Tankentlüftung und/oder einem Bremskraftverstärker und/oder einer Geräuschentwicklung und/oder dergleichen ermittelt wird.

4. Verfahren nach Anspruch 3, **dadurch gekennzeichnet, daß** für die Abgasrückführung und/oder die Tankentlüftung und/oder den Bremskraftverstärker und/oder die Geräuschentwicklung jeweils ein maximal zulässiges Druckverhältnis (pspuagrs, psputes, pspubgs) vorgegeben wird, und daß das kleinste (pspus) der maximal zulässigen Druckverhältnisse (pspuagrs, psputes, pspubgs) der Ermittlung der erforderlichen Luftmasse (rlsollsch) zugrundegelegt wird.

5. Verfahren nach Anspruch 4, **dadurch gekennzeichnet, daß** das kleinste (pspus) der maximal zulässigen Druckverhältnisse (pspuagrs, psputes, pspubgs) mit einem tatsächlichen Druck (pu_w) der Umgebung verknüpft wird.

6. Verfahren nach Anspruch 4 oder 5, **dadurch gekennzeichnet, daß** das maximal zulässige Druckverhältnis (pspubgs) für den Bremskraftverstärker und/oder für die Geräuschentwicklung über ein insbesondere von der Drehzahl (nmot) der Brennkraftmaschine (1) abhängiges Kennfeld (37) ermittelt wird.

7. Verfahren nach einem der Ansprüche 2 bis 6, **dadurch gekennzeichnet, daß** die erforderliche Luftmasse (rlsollsch) mittels einer Drosselklappe (18) eingestellt wird.

8. Verfahren nach einem der Ansprüche 2 bis 7, **dadurch gekennzeichnet, daß** der Einspritzbeginn und/oder das Einspritzende eines den Kraftstoff in den Brennraum (4) einspritzenden Einspritzventils (8) mit dem Zündwinkel einer den Kraftstoff in dem Brennraum (4) entzündenden Zündkerze (9) koordiniert wird.

9. Verfahren nach einem der vorstehenden Ansprüche, **dadurch gekennzeichnet, daß** die tatsächlich zugeführte Luftmasse (rl) auf die erforderliche Luftmasse (rlsoll) geregelt wird.

10. Verfahren nach einem der vorstehenden Ansprüche, **dadurch gekennzeichnet, daß** in der ersten Betriebsart eine Lambda-Regelung (29) durchgeführt wird.

11. Brennkraftmaschine (1) insbesondere für ein Kraftfahrzeug, mit einem Einspritzventil (8), mit dem Kraftstoff entweder in einer ersten Betriebsart während einer Ansaugphase oder in einer zweiten Betriebsart während einer Verdichtungsphase direkt in einen Brennraum (4) eingespritzt wird, und mit einem Steuergerät (20) zur unterschiedlichen Steuerung und/oder Regelung der in den Brennraum (4) einzuspritzenden Kraftstoffmasse in den beiden Betriebsarten, **dadurch gekennzeichnet, daß** das Steuergerät (20) derart ausgestaltet ist, daß in der ersten Betriebsart aus einem angeforderten Moment (milsoll) eine erforderliche Luftmasse (rlsollhom) und daraus die einzuspritzende Kraftstoffmasse (rksoll) ermittelt wird, daß in der zweiten Betriebsart die einzuspritzende Kraftstoffmasse (rksoll) unmittelbar aus dem angeforderten Moment (miksoll) ermittelt wird, und daß die erforderliche Luftmasse (rksollhom) und die einzuspritzende Kraftstoffmasse (rksoll) mittels Aktoren eingestellt werden.

12. Brennkraftmaschine (1) nach Anspruch 11, **dadurch gekennzeichnet, daß** ein zu dem Brennraum (4) führendes Ansaugrohr (6) mit einem Drucksensor (19) und mit einer Drosselklappe (18) versehen ist.

13. Brennkraftmaschine (1) nach Anspruch 12 oder 11, **dadurch gekennzeichnet, daß** dem Brennraum (4) eine Zündkerze (9) zugeordnet ist.

## Claims

1. Method for operating an internal combustion engine (1), in particular of a motor vehicle, in which fuel is injected directly into a combustion chamber (4) either in a first operating mode during an induction phase or in a second operating mode during a compression phase, and in which the mass of fuel (rksoll) which is to be injected into the combustion chamber (4) is controlled differently in the two operating modes, **characterized in that** in the first operating mode a required air mass (rlsollhom) is determined from a demanded torque (milsoll), and from this the mass of fuel which is to be injected (rksoll) is determined, **in that** in the second operating mode the mass of fuel which is to be injected (rksoll) is determined directly from the demanded torque (miksoll), and **in that** the required air mass (rksollhom) and the mass of fuel which is to be injected (rksoll) are set by means of actuators.

2. Method according to Claim 1, **characterized in that** in the second operating mode the required air mass (rlsollsch) is determined as a function of operating variables of the internal combustion engine (1).

3. Method according to Claim 2, **characterized in that** the required air mass (rlsollsch) is determined as a function of an exhaust-gas recirculation and/or a tank venting and/or a brake booster and/or production of noise and/or the like.

4. Method according to Claim 3, **characterized in that** a maximum permissible pressure ratio (pspuagrs, psputes, pspubgs) is predetermined in each case for the exhaust-gas recirculation and/or the tank venting and/or the brake booster and/or the development of noise, and **in that** the smallest (pspus) of the maximum permissible pressure ratios (pspuagrs, psputes, pspubgs) is used as the basis for the determination of the required air mass (rlsollsch).

5. Method according to Claim 4, **characterized in that** the smallest (pspus) of the maximum permissible pressure ratios (pspuagrs, psputes, pspubgs) is linked to an actual ambient pressure (pu_w).

6. Method according to Claim 4 or 5, **characterized in that** the maximum permissible pressure ratio (pspubgs) for the brake booster and/or for the development of noise is determined by means of a characteristic diagram (37) which is dependent in particular on the speed (nmot) of the internal combustion engine (1).

7. Method according to one of Claims 2 to 6, **characterized in that** the required air mass (rlsollsch) is set by means of a throttle valve (18).

8. Method according to one of Claims 2 to 7, **characterized in that** the start of injection and/or the end of injection of an injection valve (8) which injects the fuel into the combustion chamber (4) is coordinated with the ignition angle of a spark plug (9) which ignites the fuel in the combustion chamber (4).

9. Method according to one of the preceding claims, **characterized in that** the air mass which is actually supplied (rl) is regulated to the required air mass (rlsoll).

10. Method according to one of the preceding claims, **characterized in that** in the first operating mode a lambda control (29) is carried out.

11. Internal combustion engine (1) in particular for a motor vehicle, having an injection valve (8), which is used to inject fuel directly into a combustion chamber (4) either in a first operating mode during an induction phase or in a second operating mode during a compression phase, and having a control unit (20) for differently controlling the mass of fuel which is to be injected into the combustion chamber (4) in the two operating modes, **characterized in that** the control unit (20) is designed in such a manner that in the first operating mode a required air mass (rlsollhom) is determined from a demanded torque (milsoll), and from this the mass of fuel which is to be injected (rksoll) is determined, **in that** in the second operating mode the mass of fuel which is to be injected (rksoll) is determined directly from the demanded torque (miksoll), and **in that** the required air mass (rksollhom) and the mass of fuel which is to be injected (rksoll) are set by means of actuators.

12. Internal combustion engine (1) according to Claim 11, **characterized in that** an induction pipe (6) which leads to the combustion chamber (4) is provided with a pressure sensor (19) and with a throttle valve (18).

13. Internal combustion engine (1) according to Claim 11 or 12, **characterized in that** the combustion chamber (4) is assigned a spark plug (9).

## Revendications

1. Procédé de mise en oeuvre d'un moteur à combustion interne (1), notamment d'un véhicule automobile, selon lequel le carburant est injecté directement dans une chambre de combustion (4) soit selon un premier mode de fonctionnement, pendant la phase d'aspiration, soit selon un second mode de fonctionnement pendant une phase de compression et
la masse de carburant (rk_{cons}) à injecter dans la chambre de combustion (4) est commandée et/ou régulée différemment dans les deux modes de fonctionnement,
**caractérisé en ce que**
dans le premier mode de fonctionnement, à partir d'un couple demandé (mil_{cons}) on détermine la masse d'air nécessaire (rl_{conshom}) et à partir de là la masse de carburant à injecter (rk_{cons}),
dans le second mode de fonctionnement on détermine directement la masse de carburant à injecter (rk_{cons}) à partir du couple demandé (mik_{cons}), et on règle la masse d'air nécessaire (rk_{conshom}) et la masse de carburant à injecter (rk_{cons}) à l'aide d'actionneurs.

2. Procédé selon la revendication 1,
**caractérisé en ce que**
dans le second mode de fonctionnement on détermine la masse d'air nécessaire (rl_{conssch}) en fonction des paramètres du moteur à combustion interne (1).

3. Procédé selon la revendication 2,
**caractérisé en ce qu'**
on détermine la masse d'air nécessaire (rl_{conssch}) en fonction d'une recirculation de gaz d'échappement et/ou d'une ventilation de réservoir et/ou d'un amplificateur de force de freinage et/ou d'un développement de bruit et/ou d'un moyen analogue.

4. Procédé selon la revendication 3,
**caractérisé en ce que**
pour la recirculation des gaz d'échappement et/ou la ventilation du réservoir et/ou l'amplificateur de la force de freinage et/ou le développement du bruit on prédétermine chaque fois un rapport de pression maximum autorisé (pspuagrs, psputes, pspubgs) et
le plus petit (pspus) des rapports de pression maximum autorisés (pspuagrs, psputes, pspubgs) est utilisé comme base pour déterminer la masse d'air nécessaire (rl_{conssch}).

5. Procédé selon la revendication 4,
**caractérisé en ce que**
le plus petit (pspus) des rapports de pression maximum autorisés (pspuagrs, psputes, pspubgs) est combiné avec la pression effective (pu_w) de l'environnement.

6. Procédé selon l'une quelconque des revendications 4 ou 5,
**caractérisé en ce que**
le rapport de pression maximum autorisé (pspubgs) pour l'amplificateur de la force de freinage et/ou pour le développement du bruit se détermine à partir d'un champ de caractéristiques (37) dépendant notamment de la vitesse de rotation (nmot) du moteur à combustion interne (1).

7. Procédé selon l'une quelconque des revendications 2 à 6,
**caractérisé en ce qu'**
on règle la masse d'air nécessaire (rl_{conssch}) à l'aide d'un volet d'étranglement (18).

8. Procédé selon l'une quelconque des revendications 2 à 7,
**caractérisé en ce qu'**
on coordonne le début de l'injection et/ou la fin de l'injection d'un injecteur (8) injectant du carburant dans la chambre de combustion (4) avec la bougie (9) déclenchant l'allumage du carburant dans cette chambre (4).

9. Procédé selon l'une quelconque des revendications précédentes,
**caractérisé en ce que**
la masse d'air effectivement fournie (rl) est régulée sur la masse d'air nécessaire (rl_{cons}).

10. Procédé selon l'une quelconque des revendications précédentes,
**caractérisé en ce que**
la régulation lambda (29) se fait dans le premier mode de fonctionnement.

11. Moteur à combustion interne (1), notamment pour un véhicule automobile, comportant un injecteur (8) qui injecte directement le carburant dans une chambre de combustion (4) soit selon un premier mode de fonctionnement pendant une phase d'émission soit selon un second mode de fonctionnement pendant une phase de compression et un appareil de commande (20) pour commander et/ou réguler différemment la masse de carburant à injecter dans la chambre de combustion (4) pour les deux modes de fonctionnement,
**caractérisé en ce que**
l'appareil de commande (20) détermine, dans le premier mode de fonctionnement, une masse d'air nécessaire (rk_{conshom}) selon le couple demandé (mil_{cons}) et en déduit la masse de carburant à injecter (rk_{cons}),
et dans le second mode de fonctionnement il détermine directement la masse de carburant à injecter (rk_{cons}) à partir du couple à fournir (mik_{cons}) et
il règle la masse d'air nécessaire (rk_{conshom}) et la masse de carburant à injecter (rk_{cons}) à l'aide d'actionneurs.

12. Moteur à combustion interne (1) selon la revendication 11,
**caractérisé en ce que**
la tubulure d'admission (6) reliée à la chambre de combustion (4) est équipée d'un capteur de pression (19) et d'un volet d'étranglement (18).

13. Moteur à combustion interne (1) selon l'une quelconque des revendications 11 ou 12,
**caractérisé en ce que**
la chambre de combustion (4) est équipée d'une bougie (9).
